# EUROPEAN PATENT SPECIFICATION

(11) **EP 0 186 612 B1**
(45) Date of publication and mention of the grant of the patent: **03.03.1993**
(21) Application number: 85630229.4
(22) Date of filing: 18.12.1985
(51) Int. Cl.: G06F 15/20, G06F 15/60, G05B 9/03

(54) **Control system actuator position synthesis for failure detection**
Antriebstellungsynthesis von einem Steuersystem zur Störungsentdeckung
Synthèse de position de l'actionneur d'un système de commande pour détection de défauts

(30) Priority: 20.12.1984 US 683887
(43) Date of publication of application: 02.07.1986
(73) Proprietor: UNITED TECHNOLOGIES CORPORATION, Hartford, CT 06101 (US)
(72) Inventor: Spock, Wayne Richard, Canton Connecticut 06019 (US); Urbanik, Peter James, Wethersfield Connecticut 06109 (US)
(74) Representative: Waxweiler, Jean

(56) References cited:
- EP-A- 0 093 276
- FR-A- 2 528 191
- PROCEEDINGS OF THE IEEE 1984 NATIONAL AEROSPACE AND ELECTRONICS CONFERENCE, NAECON 1984, Dayton Convention Center, 21st-25th May 1984, sponsored by IEEE Dayton Section Aerospace and Electronic Systems Society, vol. 1, pages 639-644, IEEE; C.SOETAERT: "An advanced signal selection algorithm"

## Description

This invention relates to electronic engine controls (EECs) for gas turbine engines, and more particularly to failure detection circuitry for use therein.

As known, EECs electronically control operation of gas turbine engines based on selected control algorithms executed by the EEC. The EEC applies the control algorithms in response to sensed engine parameter signals to provide electrical control signals to engine mounted electro-mechanical devices. These include linear and rotary position actuators which position various engine valves, vanes, etc. to regulate engine performance.

To ensure reliability, the EEC includes redundant control circuitry, i.e. primary and secondary control channels. The sensed engine parameter signals are also redundant, and are applied to each of the EEC channels. The sensed parameter signals include analog (amplitude and frequency) signal formats, as well as digital.

EP-A-0093276 discloses a turbine control system using redundant speed sensors feeding primary and secondary speed computers in primary and secondary control channels for the actuator of a steam valve controlling the steam supply to a steam turbine. A valve control selector is connected between the primary and secondary control channels and the valve to connect one of the control channels to the valve and to switch to the other control channel when the one control channel is faulty. The use of a mathematical model of a control system is shown in EP-A-0093276.

Digital electronic engine controls (DEEC) use digital signal processing to apply the control algorithms to the sensed parameter signals. For the analog sensed signal formats this requires analog-to-digital (A/D) conversion, all of which is well known. Since A/D conversion is sensitive to spurious noise associated with the analog signal it is also known to provide the DEEC with input selection logic. This logic selects the best signal from among the two actual sensed parameter signals.

The executed control laws algorithms provide the output control signals, including actuator position command signals to the engine mounted actuators, which physically position the various valves and vanes in the engine. Since reliability of the actuator loops is critical to engine reliability, the redundant position feedback signals from the actuator are compared to detect gross malfunction. As a result, the DEEC can detect a faulty actuator control loop and use a backup actuator system (if available). The difficulty, however, is the ability to isolate the particular failed component in the actuator operating system, and then to identify the failed component to maintenance personnel.

The object of the present invention is to provide fault detection and fault reporting routines for use in DEEC systems.

This object is achieved in an apparatus according to the preamble of claim 1 by the features of the characterizing part thereof. Embodiments of the invention are described in the dependent claims.

According to an aspect of the invention, the redundant sensed actuator position signals are sampled periodically and the samples compared to a synthesized position value obtained from an actuator model, if the difference magnitude between the sample value and the synthesized value exceeds an accepted magnitude the sample is rejected for use in the sample period and the periodicity of sample rejection is recorded, if the periodicity becomes sufficiently high the sensed feedback signal itself is rejected for use in the actuator control loop and the signal's position sensor is recorded as failed, if both samples are simultaneously rejected in the same sample period a diagnostic routine determines if the fault is in the sensors or the common actuator, and the actuator is deactivated.

These and other objects, features, and advantages of the present invention will become more apparent in light of the following detailed description of a best mode embodiment thereof, as illustrated in the accompanying drawings, wherein:
Fig. 1 is a conceptual illustration of an electronic engine control, which is used in the description of the present invention;
Fig. 2 is a system block diagram of the failure detection circuitry of the present invention;
Fig. 3 is a functional diagram of an actuator model response, for use in describing operation of the circuitry of Fig. 2; and
Fig. 4 is a flowchart diagram illustrating the steps performed by the circuitry of Fig. 2.

### Best Mode for Carrying Out the Invention

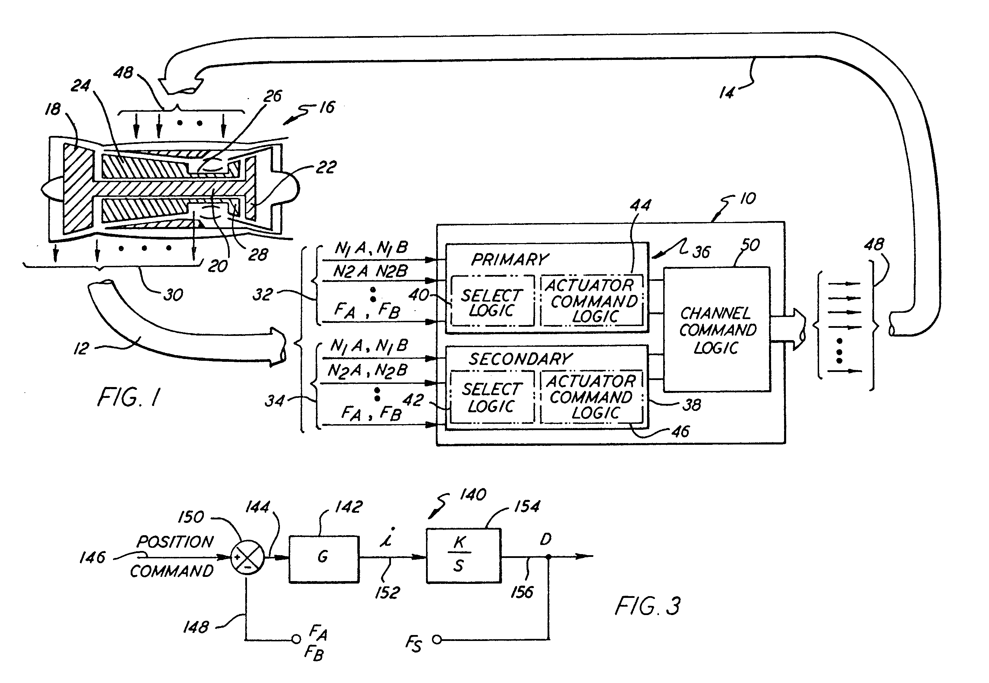

Fig. 1 is a simplified, conceptual block diagram of a digital electronic engine control (DEEC) 10 in which the present invention may be used. The DEEC is connected through sensor lines 12 and control lines 14 to a gas turbine engine 16. The engine shown is a twin spool turbofan engine with a low compressor 18 driven through shaft 20 by a low turbine 22, and a high compressor 24 driven through shaft 26 by a high turbine 28. The present invention, however, may be used with any configuration gas turbine engine.

The sensed engine parameters 30 include redundant low turbine and high turbine speed signals (N_{1A}, N_{1B} and N2A, N2B) and redundant sensed position feedback voltage signals F_{A}, F_{B} from each of the various position controlled devices in the engine. This includes fuel valve positioning. The redundant (A, B) signals are presented through lines 12 to the inputs 32, 34 of both a primary control channel 36 and secondary control channel 38 of the DEEC.

In the conceptual illustration of Fig. 1, each DEEC channel is shown to include signal selection logic 40, 42, and actuator command logic 44, 46. The selection logic selects the best available sensed parameter signal (e.g. best of redundant sensed position feedback) for presentation to the actuator command logic. The actuator command logic applies the selected sensed signal data to provide actuator position control signal outputs 48. The control signals are provided through lines 14 from one of the two channels as determined by channel command logic 50, all of which is known.

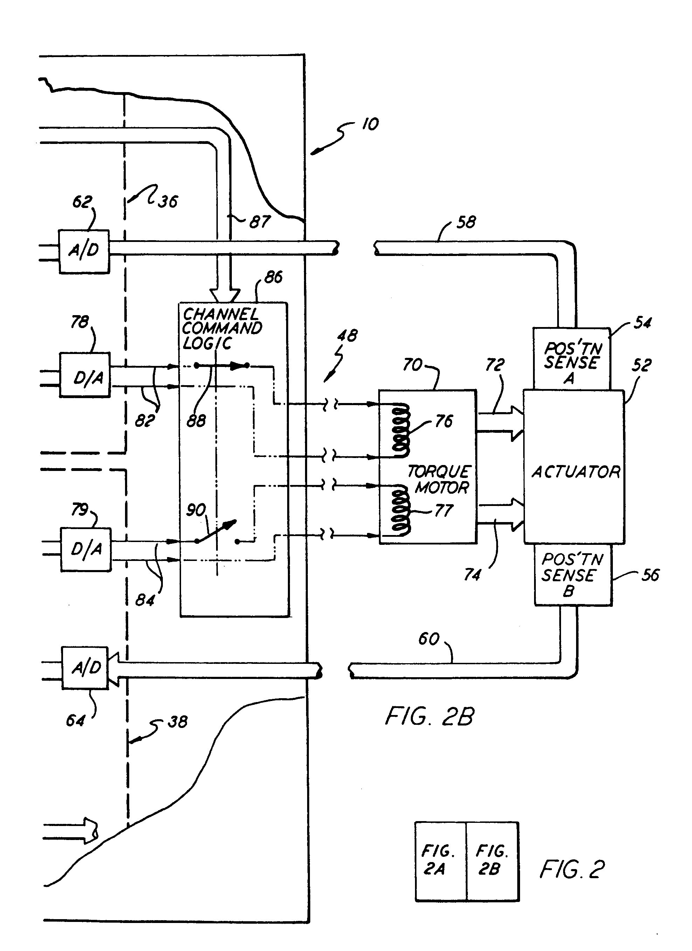

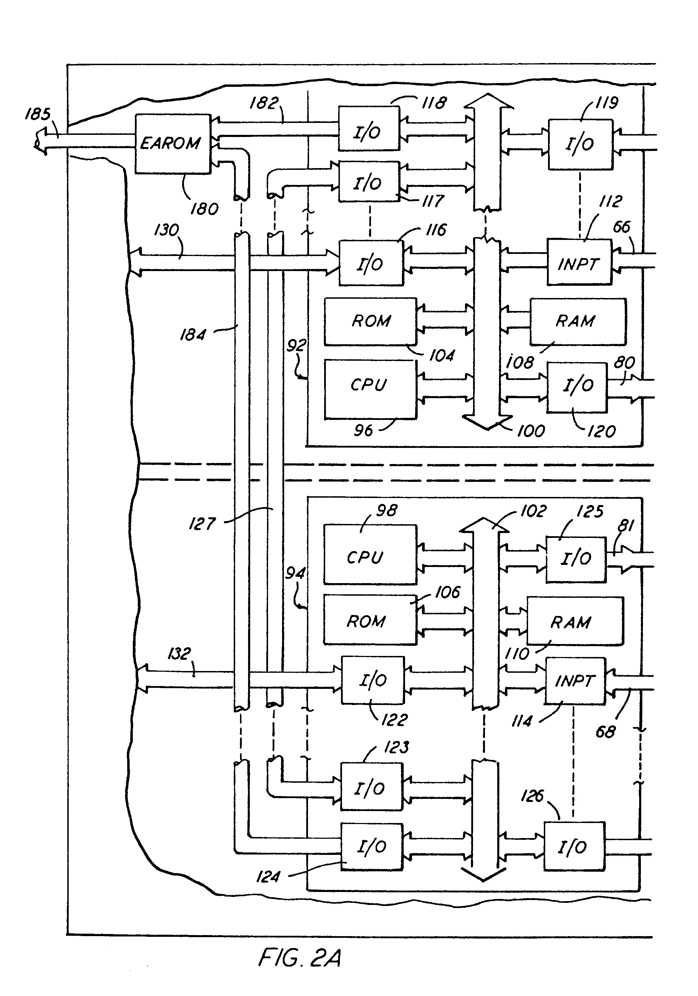

Fig. 2 is a detailed block diagram illustration of the relevant circuitry of the DEEC 10 primary and secondary channels 36, 38, in which the present failure detection circuitry may be used. In the embodiment of Fig. 2 the failure detection is for use with one of the engine position actuators 52, and its redundant actuator position sensors 54, 56. In Fig. 2 the redundant sensors are labeled position sensor A and position sensor B. The use of redundant position sensors, and redundant drive coils described hereinafter, is required due to their location within the hostile engine environment engine and also to ensure single fault tolerance of the DEEC. In some configurations redundant actuator loops may be provided to protect against single actuator failures.

The position sensors A, B (54, 56) each provide an actual sensed position feedback signal (F_{A}, F_{B}) on lines 58, 60 back to the DEEC. Analog-to-digital (A/D) converters 62, 64 within DEEC 10 convert the amplitude intelligence of the sensed analog signals to equivalent digital signals having one or more bytes of digital signal bits, and provided on lines 66, 68 to the primary and secondary channels 36, 38 of the DEEC.

The actuator 52 may be either a linear or rotary type actuator; it is assumed in the Fig. 2 embodiment that it is a linear, pneumatic actuator driven by torque motor 70. The torque motor alternately provides pneumatic fluid through lines 72, 74 to upper and lower chambers of the actuator, to extend or retract the actuator position, all of which is well known in the art. The torque motor includes redundant current drive windings 76, 77 each of which is driven by separate analog drive current signals from individual digital-to-analog (D/A) converters 78, 79. Each D/A converter receives the equivalent digital actuator drive signals through lines 80, 81 from the associated primary and secondary channels.

The primary and secondary channels are redundant controllers. However, only one channel is in control at any one time. Therefore, only one of the torque motor coils 76, 77 is energized at any one time. Channel command logic 86 connects the output (82, 84) from the controlling one of the two channels to the DEEC output 48 (Fig. 1). It does this in response to command signals received through lines 87 from the primary channel. To facilitate understanding, the channel command function is illustrated with the pair of single pole - double throw switches 88, 90; one connected to each channel's actuator current signal output on lines 82, 84. As shown, only one switch is closed at a time.

In Fig. 2, only those portions of the primary and secondary channels as are necessary to teach the operation of the present invention, are shown. Each channel includes its own signal processor; signal processor 92 for the primary channel and 94 for the secondary channel. Each processor includes a central processing unit (CPU) 96, 98, which are typically sixteen bit machines, of a type known in the art. Each CPU is connected through a signal processor bus 100, 102 to read only memory (ROM) 104, 106 and random access memory (RAM) 108, 110. The ROM and RAM memories are similarly of a known type, with memory capacity determined by the particular DEEC control application. The ROM stores the CPU program memory, including the DEEC control algorithms and the failure detection algorithm of the present invention. The RAM provides data storage. Each of the signal processors 92, 94 include input interfaces 112, 114 for receiving the digital equivalent signal of the sensed position feedback signals F_{A}, F_{B} on the lines 66, 68. Each processor further includes some number of input/output (I/O) interfaces 116-120 and 122-126. The two CPUs exchange the sensed feedback signal information through lines 127 connected to I/O interfaces 117, 123. Other peripherals connected to the processor busses, which are not necessary to an understanding of the present invention, are not shown.

The operation of the DEEC in controlling the position of actuator 52, is well known. Briefly, with respect to Fig. 2, control information relating to the desired position of the actuator is received by the primary and secondary channels. The DEEC selection circuitry and preceding control law functions (not shown) process the parent system information to provide actuator position command signals on the input lines 130, 132 to the primary and secondary signal processors 92, 94. The position command information on these input lines is multiplexed together with other input information received by the processors. The received position command signal is received by the CPUs 96, 98 through I/O interfaces 116, 122 and the processor buses 100, 102. The CPUs provide the required actuator drive signal through I/O interfaces 120, 125 and lines 80, 81 to the D/A converters 78, 79.

The torque motor responds to the drive current signals on the energized one of the two windings to position the actuator. The drive current produces a slew rate in the actuator (length per unit time, i.e. velocity) and the position sensors A, B (54, 56) both track the actual position together; each providing the respective feedback signals F_{A}, F_{B} on the lines 58, 60.

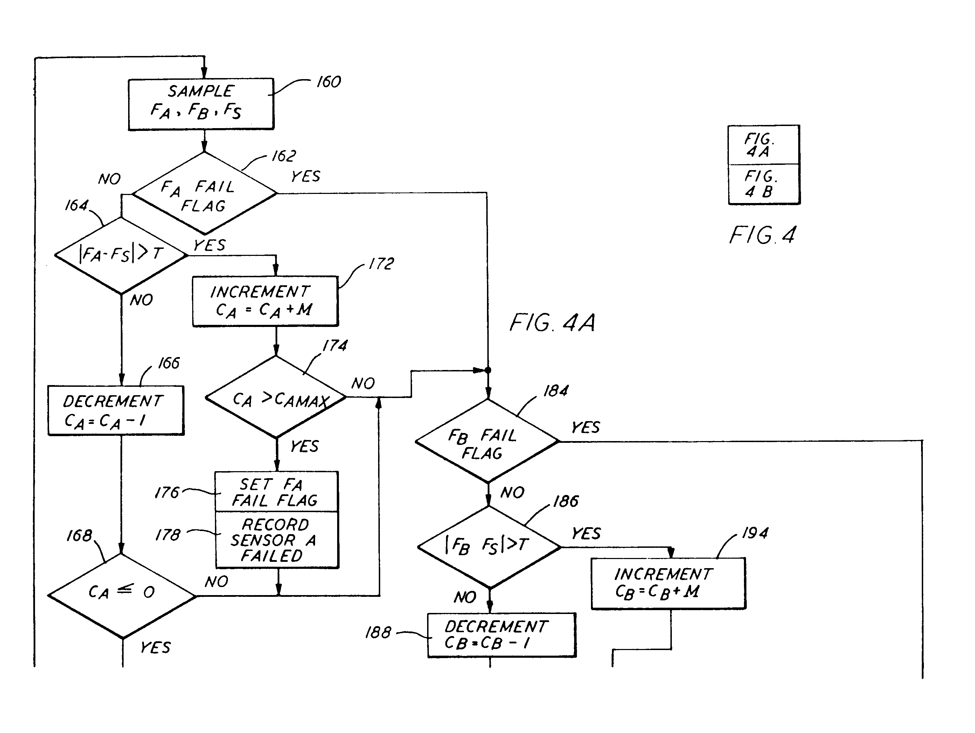

The present invention performs: (a) a selection of the one of two redundant sensed position feedback signals (F_{A}, F_{B}) which is then used by the actuator control algorithm executed by the CPUs 96, 98. The selection of which of the two sensed feedback signals to be used is provided by a selection routine which compares the actual sensed magnitude of each of the sensed position feedback signals with a synthesized feedback signal (F_{S}) which represents the response of an idealized "model" of the actuator loop. Fig. 3 illustrates the use of the actuator loop in synthesizing the position feedback signal. The model 140 includes the sum forward gain (G) 142 of the actuator loop which receives the error signal on line 144 which is equal to the difference signal magnitude between the actuator position command signal on an input line 146 and the selected one of the two actual sensed feedback signals (F_{A}, F_{B}) on lines 148. The two signals are summed in summing junction 150. The product of the error signal and the forward gain produces an actuator current signal on line 152 to the actuator model, which is illustrated as the LaPlace integral transform K/S 154. The integral, which represents the actuator position, is provided on output line 156 as the output D (Displacement) and as the synthesized feedback signal (F_{S}). The model is used to synthesize the nominal feedback signal for a present sample interval in response to the use of the selected one of the two actual position feedback signals in a preceding sample interval. The simulated F_{S}, however, is not used to close the loop.

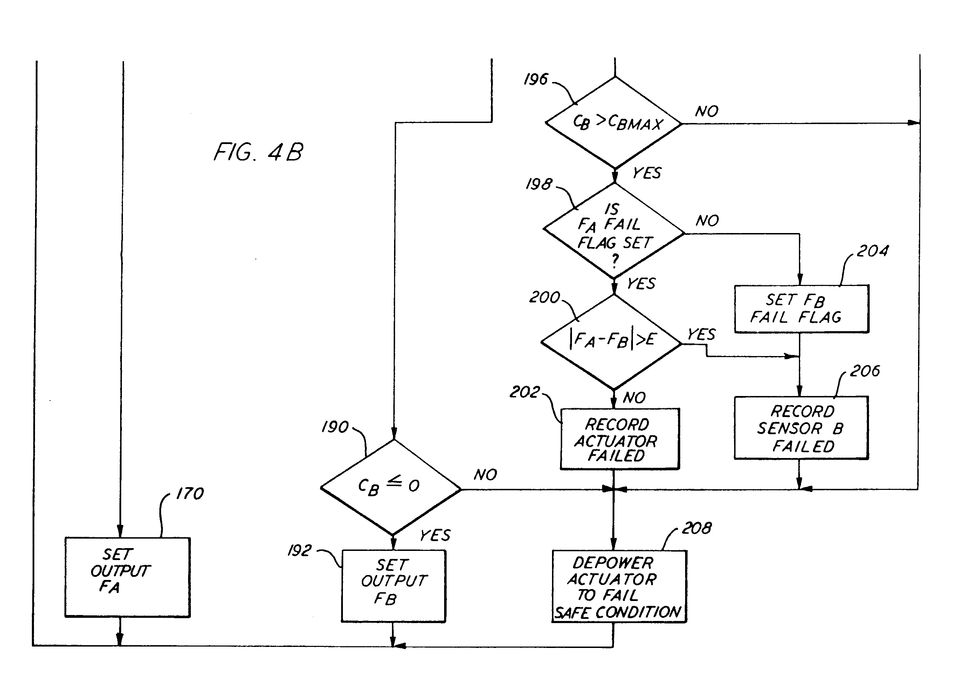

Fig. 4 is the flowchart of the source code listing for performing the fault isolation algorithm of the present invention in the DEEC control channel signal processors (92, 94). In operation, instructions 160 request the sampling of the two actual feedback sample values F_{A}, F_{B}, and the synthesized value F_{S}. Decision 162 determines if the F_{A} FAIL FLAG is set. This flag is set in response to the permanent rejection of the F_{A} sensed signal, as described hereinafter. The rejection is precipitated by either a "hard" failure (i.e. mechanical or electrical malfunction) or a "soft" failure (i.e. out of tolerance), all of which is described hereinafter.

Assuming that there is no present rejection of the F_{A} sensed signal, decision 162 results in a NO answer. Decision 164 next determines if the absolute value of the difference signal magnitude between the sensed signal F_{A} and the synthesized signal F_{S} is greater than a selected tolerance (T). If NO, indicating the sensed signal is in tolerance, instructions 166 decrement a counter (C_{A}) by one count. As also described hereinafter, the invention counts each "out of tolerance" occurrence of the sensed signal, which is a rejection of the sensed signal, as a multiple count value. Typically the rejection count value is three. Each nonrejected (in tolerance) occurrence of the sensed signal sample results in the single down count. As a result it requires three nonrejected samples to cancel each rejected sample occurrence. The presence of a positive sum count indicates a failure mode condition; whether consistent or periodic rejected samples which occur within the "healing" period established.

Following the single down count of instructions 166 decision 168 determines if the present sum count is less than, or equal to zero (indicating no immediately preceding rejected samples). If YES (no evidence of sample malfunctions), instructions 170 select the F_{A} sensed signal sample as the actual feedback position of the actuator for the present sample interval. This is indicated by instructions 170 which set the output to F_{A}, after which the routine branches back to instructions 160.

If the present F_{A} sample is out of tolerance, resulting in a YES to decision 164, instructions 172 increment the sum count value C_{A} by the multiple count value M. As stated, the multiple count value is typically three. Decision 174 next determines if the sum count is greater than a maximum allowable count value. If YES, indicating the presence of a high frequency of failure occurrences, instructions 176 set the F_{A} FAIL FLAG; permanently rejecting the F_{A} sensed signal for the remainder of the flight. Instructions 178 record the message "sensor A failed". The recorded message is for maintenance purposes in aiding the maintenance personnel to locate the failed component. The message is recorded in the RAM of the controlling one of the two channels (RAM 108, 110). Alternatively, the preferred recording site is in nonvolatile memory. Preferably it includes an electrically alterable read only memory (EAROM) 180 (Fig. 2) which can be written to directly by each of the two DEEC channel I/O interfaces 118, 124, through lines 182, 184. The EAROM content can be read through lines 185 on the ground. This provides a failure history log which is accessible by maintenance personnel.

Referring again to Fig. 4, following: instructions 178, a YES to decision 162, a NO to decision 174, and a NO to decision 168, decision 184 determines if the F_{B} FAIL FLAG is set. The F_{B} condition is not examined until the F_{A} sensed signal sample is rejected. If NO, decision 186 determines if the difference signal magnitude between the F_{B} sample value and the F_{S} value is greater than the selected tolerance (T). If NO, instructions 188 decrement the sum count C_{B}, for the F_{B} sensed signal, by one. Decision 190 next determines if the C_{B} sum count value is less than or equal to zero. If YES, instructions 192 select the F_{B} sensed value as the output for the present sample cycle.

If the F_{B} sample is out of tolerance, a YES to decision 186 is followed by instructions 194 which increment the C_{B} sum count by the multiple count value M (typically three). Decision 196 next determines if the count C_{B} is greater than the maximum. If YES, indicating that the F_{B} sample is also rejected, decision 198 determines if the F_{A} FAIL FLAG is set. This decision is a diagnostic determination. If the F_{A} FAIL FLAG is already set, and now the F_{B} sensed sample value is rejected, there may be a common cause to both failures; namely, the actuator itself may be at fault. Therefore, in response to a YES to decision 198, decision 200 determines if the difference signal magnitude between the F_{A} and F_{B} samples is greater than a selected error (E) amount. If NO, this indicates that the sensor outputs are tracking within a relative tolerance band; each, however, are out of tolerance with respect to the synthesized F_{S} value. It is assumed in response to a NO from decision 200, that the fault does not lie in the sensors but instead in the actuator itself. As a result, instructions 202 record an "actuator failed" message in memory, i.e. in EAROM 180.

If the answer to decision 198 is NO, meaning that there is no apparent trend to sensor failures, instructions 204 set the F_{B} FAIL FLAG, indicating permanent rejection of the F_{B} sensed signal. Following instructions 204, or a YES to decision 200 (the two sensors are not tracking within an acceptable E error band) instructions 206 record a "sensor B failed" message in memory 180 (Fig. 2).

Following instructions 202, 206, or a YES to decision 184, instructions 208 request that the actuator be depowered to a predetermined, safe condition. This is necessary since neither of the two sensed position values were found to be acceptable, or the actuator itself was determined to be at fault.

## Claims

1. Apparatus for diagnosing failures in an actuator loop of a digital electronic engine control (DEEC) which controls the actuator position in each of a plurality of successive sample intervals in dependence on the difference signal magnitude between an actuator position command signal sample and an actual actuator position signal sample selected from one of two sensed actuator position signals provided from first and second position sensors associated with the actuator, comprising:
model means (140), for simulating the signal response of the actuator loop to the difference signal magnitude between the actuator position command signal sample (POSITION COMMAND) and the selected actual position signal (F_{A}; F_{B}) sample from a preceding sample interval, to provide a synthesized actuator position signal sample (F_{S}) representative of the expected actuator position in a present sample interval; characterized by:
signal selection means (40, 96, 42, 98), responsive to the actual position signal samples (F_{A}; F_{B}) of each sensed actuator position signal and responsive to said synthesized signal sample (F_{S}),
for determining the difference signal magnitude between each actual position sample (F_{A}; F_{B}) and said synthesized sample (F_{S}) to select for use by the DEEC, a first one of the actual samples (F_{A} or F_{B}) whose difference value is within a maximum position difference limit (T),
for rejecting for use in a sample interval an actual sample (F_{A}; F_{B}) having a difference signal value greater than said maximun position limit,
for providing a fail signal (F_{A} FAIL; F_{B} FAIL) identifying as failed any of said position sensors providing an actual signal sample having a difference magnitude greater than said maximum limit in a successive number of sample intervals; and
recording means (RAM 108, 110), for recording each of said fail signals from said selection means to provide a failure diagnosis record for the actuator loop.

2. The apparatus of claim 1, wherein
said signal selection means, in response to both of said actual samples (F_{A}; F_{B}) having a difference magnitude greater than said maximum position limit, includ means
for providing an actuator loop failure signal (208) to the DEEC to command actuator shutdown,
for determining the difference signal magnitude (164; 186) between said actual samples, and
in response to an actual sample difference signal magnitude less than an error difference limit, for providing a failure signal (176; 204) identifying the actuator as failed.

3. The apparatus of claim 1, further comprising:
counter means, responsive to each of said actual sample rejections by said selection means, for counting (1'; 194) each sample interval rejection as a plural count value and each sample interval nonrejection of a particular actual sample as a single count value, said counter subtracting (166; 188) said single count nonrejections from said plural count rejections to provide a sum count signal indicative of the accrued rejections and non-rejections in each present sample interval, and
detection means, responsive to said sum count signal, for providing (174; 196) a maximum sum count signal in response to said sum count value exceeding a maximum selected count value, and wherein
said selection means is responsive to said maximum sum count signal for providing (176; 204) said fail signal in the presence thereof.

## Patentansprüche

1. Vorrichtung zum Diagnostizieren von Ausfällen in einer Stellantriebsschleife eines digitalen elektronischen Triebwerksreglers (DEEC), der die Stellantriebsposition in mehreren aufeinanderfolgenden Abtastintervallen in Abhängigkeit von der Differenzsignalgröße zwischen einer Stellantriebspositionsbefehlssignalabtastprobe und einer tatsächlichen Stellantriebspositionssignalabtastprobe, die unter zwei erfaßten Stellantriebspositionssignalen ausgewählt worden ist, welche aus einem ersten und zweiten Positionssensor stammen, die dem Stellantrieb zugeordnet sind, regelt, mit:
einer Modelleinrichtung (140) zum Simulieren der Signalantwort der Stellantriebsschleife auf die Differenzsignalgröße zwischen der Stellantriebspositionsbefehlssignal-Abtastprobe(POSITIONSBEFEHL) und der gewählten tatsächlichen Positionssignal (F_{A}; F_{B})-Abtastprobe aus einem vorhergehenden Abtastintervall, um eine synthetisierte Stellantriebspositionssignalabtastprobe (F_{S}) zu liefern, welche die erwartete Stellantriebsposition in einem gegenwärtigen Abtastintervall repräsentiert; gekennzeichnet durch:
eine Signalwähleinrichtung (40, 96, 42, 98), die auf die tatsächlichen Positionssignalabtastproben (F_{A}; F_{B}) jedes erfaßten Stellantriebspositionssignals und auf die synthetisierte Signalabtastprobe (F_{S}) anspricht,
um die Differenzsignalgröße zwischen jeder tatsächlichen Positionsabtastprobe (F_{A}; F_{B}) und der synthetisierten Abtastprobe (F_{S}) zu bestimmen, um zur Verwendung durch den DEEC eine erste der tatsächlichen Abtastproben (F_{A} oder F_{B}) auszuwählen, deren Differenzwert innerhalb einer maximalen Positionsdifferenzgrenze (T) ist,
um zur Verwendung in einem Abtastintervall eine tatsächliche Abtastprobe (F_{A}; F_{B}) zu unterdrücken, die einen Differenzsignalwert hat, der größer als die maximale Positionsgrenze ist,
um ein Ausfallsignal (F_{A}-AUSFALL; F_{B}-AUSFALL) zu liefern, das irgendeinen der Positionssensoren als ausgefallen identifiziert, welcher eine tatsächliche Signalabtastprobe liefert, die eine Differenzgröße hat, welche größer als die maximale Grenze in einer aufeinanderfolgenden Anzahl von Abtastintervallen ist; und
eine Aufzeichnungseinrichtung(RAM 108, 110) zum Aufzeichnen jedes der Ausfallsignale aus der Wähleinrichtung, um eine Ausfalldiagnoseaufzeichnung für die Stellantriebsschleife zu liefern.

2. Vorrichtung nach Anspruch 1, wobei
die Signalwähleinrichtung eine Einrichtung aufweist, die, wenn beide tatsächlichen Abtastproben (F_{A}; F_{B}) eine Differenzgröße haben, welche größer als die maximale Positionsgrenze ist,
ein Stellantriebsschleifenausfallsignal (208) an die DEEC abgibt, um die Stellantriebsabschaltung zu befehlen,
die Differenzsignalgröße (164; 186) zwischen den tatsächlichen Abtastproben bestimmt, und
auf eine tatsächliche Abtastprobendifferenzsignalgröße hin, die kleiner als eine Fehlerdifferenzgrenze ist, ein Ausfallsignal (176; 204) liefert, welches den Stellantrieb als ausgefallen identifiziert.

3. Vorrichtung nach Anspruch 1, weiter mit:
einer Zähleinrichtung, die auf jede der tatsächlichen Abtastprobenunterdrückungen durch die Wähleinrichtung hin jede Abtastintervallunterdrückung als einen Mehrfachzählwert und jede Abtastintervallnichtunterdrückung einer besonderen tatsächlichen Abtastprobe als einen einzelnen Zählwert zählt (1'; 194), wobei der Zähler die Einzelzählwertnichtunterdrückungen von den Mehrfachzählwertunterdrückungen subtrahiert (166; 188), um ein Summenzählsignal zu liefern, das die aufgelaufenen Unterdrückungen und Nichtunterdrückungen in jedem vorliegenden Abtastintervall angibt; und
einer Erfassungseinrichtung, die auf das Summenzählsignal anspricht, um ein maximales Summenzählsignal zu liefern (174; 196), wenn der Summenzählwert einen maximalen gewählten Zählwert übersteigt, und wobei
die Wähleinrichtung auf das maximale Summenzählsignal anspricht, um das Ausfallsignal in Gegenwart desselben zu liefern (176; 204).

## Revendications

1. Appareil pour diagnostiquer des défauts dans une boucle d'actionneur d'une commande électronique numérique d'un moteur qui commande la position de l'actionneur dans chaque intervalle échantillon d'une pluralité d'intervalles échantillons successifs, en fonction de l'amplitude d'un signal de différence entre un échantillon de signal d'ordre de position de l'actionneur et un échantillon de signal de position effective de l'actionneur sélectionné à partir de l'un de deux signaux détectés de position de l'actionneur fournis à partir de premier et second capteurs de position associés à l'actionneur, comprenant un moyen modèle (140) pour simuler la réponse en signal de la boucle de l'actionneur à l'amplitude du signal de différence entre l'échantillon du signal d'ordre de position de l'actionneur (ORDRE DE POSITION) et l'échantillon (F_{A};F_{B}) du signal sélectionné de position effective provenant d'un intervalle échantillon précédent, afin de produire un échantillon synthétisé (F_{S}) de signal de position de l'actionneur, lequel représente la position attendue de l'actionneur dans un intervalle échantillon présent, caractérisé en ce qu'il comprend des moyens de sélection de signaux (40,96,42,98) répondant aux échantillons (F_{A};F_{B}) du signal de position effective de chaque signal détecté de position de l'actionneur et répondant également a l'échantillon (F_{S}) du signal synthétisé, en déterminant l'amplitude du signal de différence entre chaque échantillon de position effective (F_{A};F_{B}) et l'échantillon synthétisé (F_{S}), afin de sélectionner, en vue de son utilisation par la commande électronique numérique du moteur, d'un premier échantillon parmi les échantillons de position effective (F_{A} ou F_{B}) dont la valeur de différence est comprise dans une limite de différence de position maximale (T), en rejetant, en vue d'une utilisation dans un intervalle échantillon, un échantillon de position effective (F_{A};F_{B}) ayant une valeur de signal de différence supérieure à la limite de différence de position maximale, et en fournissant un signal de défaut (DEFAUT F_{A}; DEFAUT F_{B};) identifiant, comme étant défaillant, l'un quelconque des capteurs de position qui fournit un échantillon de signal de position effective ayant une valeur de différence supérieure à la limite de différence de position maximale au cours d'un nombre d'intervalles échantillons successifs, et des moyens d'enregistrement (mémoire vive 108,110) pour enregistrer chacun de ces signaux de défaut, à partir des moyens de sélection, de manière à donner un enregistrement d'un diagnostic d'un défaut pour la boucle d'actionneur.

2. Appareil suivant la revendication 1 caractérisé en ce que les moyens de sélection de signaux, en réponse aux deux échantillons de position effective (F_{A};F_{B}) ayant tous les deux une valeur de différence supérieure à la limite de différence de position maximale, comportent des moyens pour délivrer un signal (208) de défaut dans la boucle de l'actionneur, en direction de la commande électronique numérique du moteur, afin de provoquer l'arrêt de l'actionneur, pour déterminer la valeur du signal de différence (164,186) entre les échantillons de position effective, et pour produire, en réponse à une valeur du signal de différence de l'échantillon de position effective inférieure à une limite de différence d'erreur, un signal de défaut (176;204) identifiant l'actionneur comme étant défaillant.

3. Appareil suivant la revendication 1 caractérisé en ce qu'il comprend en outre un compteur, répondant à chacun des rejets d'un échantillon de position effective par les moyens de sélection, pour compter (188,194) chaque rejet d'un intervalle échantillon comme étant une valeur de compte multiple et chaque absence de rejet d'un intervalle échantillon particulier comme étant une valeur de compte unité, ce compteur retranchant (166,188) les absences de rejet, ayant une valeur de compte unité, des rejets, ayant une valeur de compte multiple, afin de produire un signal de compte de somme représentant la totalisation des rejets et des absences de rejet dans chaque intervalle échantillon présent, et des moyens de détection, répondant à ce signal de compte de somme, en produisant (174,196) un signal de compte de somme maximal en réponse au fait que cette valeur de compte de somme dépasse une valeur de compte sélectionnée maximale, et en ce que les moyens de sélection répondent à ce signal de compte de somme maximale en produisant (176;204), en sa présence, le signal de défaut.
